# EUROPEAN PATENT APPLICATION

(11) **EP 1 092 349 A1**
(43) Date of publication of application: **18.04.2001**
(21) Application number: 99308097.7
(22) Date of filing: 14.10.1999
(51) Int. Cl.: A23F 3/14, A23F 3/40

(54) **Improved beverage composition**

(71) Applicant: UNILEVER PLC, London EC4P 4BQ (GB); UNILEVER N.V., 3013 AL Rotterdam (NL)
(72) Inventor: Metha, Sheetal Sharadkumar A/3 Rajdeep Co-op, Mumbai 400 066 Maharashtra (IN); Sukumar, Vijay Flat no.22 6th floor, Bandra(West) Mumbai 400 050 Maharashtra (IN); Virkar, Prakash Dattatraya c/o Hindustan Lever Ltd, Bangalore 560 066 (IN)
(74) Representative: Evans, Jacqueline Gail Victoria

(57) **Abstract**

A tea product contains 15-95% by weight black tea, up to 5% of a mixture comprising fructose and glucose, and up to 5% of roasted nut powder.

## Description

The present invention relates to a novel value added tea based product that is used to prepare a beverage.

### Background and prior art

Throughout the world tea is a very popular beverage. Its consumption in India is particularly high due to its popularity and availability. A survey indicates that in India the Low Unit Pack market segment for tea is of the order of 20,000 tonnes per year.

Use of additives in tea is not new. Different additives have been incorporated into tea to obtain a variety of granulated products.

Japanese patent specification JP 91109073.8 discloses the preparation of granulated tea where filtered milk powder and sugar are added to tea liquor and the mix thus obtained is spray dried.

Japanese patent specification JP 59028458 discloses a barley tea drink containing minerals, sugars and optionally fillers mixed with concentrated extract of barley that is granulated and dried.

Russian patent specification SU 1316634 discloses the production of soluble granulated tea. Tea extract and granulated sugar are mixed and dried in a fluidised bed. After drying, the granules are cooled in the fluidised bed and an aromatising agent is sprayed over the granules.

The prior art is related to preparation of granular products using tea liquor or extract and refers to different spray dried products.

Pakistan patent 135831 discloses a granulated tea based value-added product obtained using dust tea or off grade tea and sugar based additives for making a beverage that maintains the organoleptic impressions of tea. The level of sugar based additives used in the invention is as high as 30 to 85%. The beverage only maintains the organoleptic impressions of tea and does not improve the aroma or flavour of good tea.

The present inventors have addressed the problem of enhancing the organoleptic aspects of tea such as taste, aroma and flavour of tea by incorporating certain components which do not themselves have any tea flavour. That has been achieved using roasted nuts, sugars etc at very low levels. The compositions produced according to the invention are also storage stable.

### Statement of the invention

The present invention relates to a tea product with enhanced aroma and flavour comprising:
i. 15-95% by weight black tea;
ii. up to 5% of a mixture comprising fructose and glucose
iii. up to 5% of roasted nut powder and
iv. optionally roasted chicory and flavouring agents, dairy or non-diary whiteners, starch, preservatives at an optimal level.

According to a preferred aspect the present invention relates to a tea product with enhanced aroma and flavour comprising:
v. 15-95% by weight black tea;
vi. up to 5% of a mixture comprising fructose and glucose in a proportion of 1:1 or a product comprising the sugars in that proportion
vii. up to 5% of roasted nut powder and
viii. optionally roasted chicory and flavouring agents, dairy or non-diary whiteners, starch, preservatives at an optimal level.

### Detailed description of the invention

The essential aspects of the invention relates to mixing and granulating tea with up to about 5% by wt. of a combination of fructose and glucose and roasted nut powder to obtain a stable homogeneous product with enhanced aroma and flavour of tea.

"Tea" for the purposes of the present invention means leaf material from *Camellia sinensis var. sinensis* or *Camellia sinensis var. assamica.* It also includes rooibos tea obtained from *Aspalathus linearis* however that is a poor source of endogenous fermenting enzymes. "Tea" is also intended to include the product of blending two or more of any of these teas.

"Leaf tea" for the purposes of this invention means a tea product that contains one or more tea origins in an uninfused form.

Tea manufacture, especially black tea manufacture, traditionally comprises withering, rolling, fermenting and firing. Black tea for the purpose of the invention is obtained by the following process.

Withering is a process whereby the plucked tea leaves are stored for periods of time (perhaps up to 24 hours), during which they undergo various biochemical and physical changes which often includes a loss of moisture. It is optional but preferred.

Maceration follows the withering step, and traditionally the withered leaves are optionally rolled to bruise and crush the leaves i.e. break down the plant tissue structure. This will have the effect of liberating fermentable substrates and fermenting enzymes from within the plant cells and tissue. Modern tea manufacture usually includes this step however the plant cells and tissue is broken down by passing tea, which has usually been withered, through a cutting machine.

The next step is commonly called fermentation but that is a misnomer. "Fermentation" is commonly used in the context of brewing alcohol to describe the action of exogenous enzymes. However in the tea world it is used to refer to the oxidative process that tea undergoes when certain endogenous enzymes and substrates are brought together by mechanical disruption of the cells by tearing or cutting the leaves. During this process colourless catechins in the leaves are converted to a complex mixture of yellow and orange to dark-brown substances and producing a large number of aromatic volatile compounds.

The fermented product is fired and dried to give a black leaf tea. The firing involves heating and drying the tea to destroy the fermenting enzymes and thereby arrest fermentation. It results in a reduction of moisture content to below 5%, and also leads to further chemical oxidation and changes in tea aroma. This generally involves exposing the tea to a blast of hot, dry air in a dryer.

Black leaf tea thus obtained in combination with fructose and glucose in 1:1 ratio and roasted nut powder enhances the aroma and flavour of tea. It is also possible to optionally incorporate roasted chicory and flavouring agents, dairy or non-diary whiteners, starch, preservatives at an optimal level.

The combination of fructose and glucose is preferably in 1:1 proportion and is selected from invert sugar or honey or any other suitable source. Honey is the most preferred source and preferably at a level up to 2%.

Examples of nuts are cashew, almond, apricot, walnut, hazel nut, peanut or any other but the most preferred one being cashew and preferably at a level up to 2%.

Examples of sugar based additives are white sugar, Misri, refined sugar, khandasari sugar, bura sugar, gur or jaggery etc. The use of gur or jaggery is preferred. The preferred maximum mesh size for sugar based additives is 10 mesh.

According to the preferred embodiment of the invention additives such as flavouring agents like ginger, cardamom, cinnamon, lemon in an amount up to 10% by wt., diary or non diary whiteners in an amount up to 10% by wt., natural or chemically or physically modified food grade starch up to 45% by wt. may be incorporated. Preservatives may be incorporated in appropriate amounts.

The tea obtained as a final product has a moisture level in the range from 5-15% and preferably 5-7% and the particle size of the product should be in the range 0.5-5 mm.

The invention will be illustrated by the following examples.

### Examples

### EXAMPLE 1

### Granulation process

Tea, honey and roasted and powdered cashew containing about 10-15% moisture were mixed thoroughly in a HOBART^{TM} mixer for 15 minutes. The mixture was granulated on 16 mesh size and the granules were dried in cabinet tray drier at 90°C for about 20 minutes to bring the moisture of the product to ∼5%.

### EXAMPLE 2

### Storage studies

Samples prepared according to Example 1 were subjected to accelerated storage under hot and conditions (40°C/90% RH). Ten replications were maintained for each set.

The samples were tested at weekly intervals for moisture content, microbiological evaluation and organoleptic studies.

### Moisture content

The samples were analysed for the moisture level by the oven method wherein known amount of sample was dried in an oven at 100°C for 16 hours and readings were taken to ensure constant weight was maintained. On the basis of difference in weight, moisture content was calculated and is presented in Table 1.

**TABLE 1 :**

| Data on the moisture content | | |
|---|---|---|
| Period of storage | % Moisture | Flowability |
| Initial | 5 | free flowing |
| 8 weeks | 7 | free flowing |

Data presented in Table 1 shows that even after storage for 8 weeks the moisture build up was not significant and the material remained free flowing.

### Microbiological evaluation

The samples stored for 8 weeks under hot and humid conditions were subjected to microbiological analysis for Total Viable Count (TVC), yeast and mould, E. coli and coliform according to standard procedure and compared with the standard prescribed for black tea.

**TABLE 2 :**

| Microbiological evaluation | | |
|---|---|---|
| Micro-organism | Standard for black tea | Test sample |
| TVC^{∗} | <100,000/g | 8000/g |
| *E. coli* | Nil | Nil |
| Coliform | <500/g | <10 |
| Yeast & mould | <50,000/g | 1000 |

| | | |
|---|---|---|
| Microbiological evaluation | | |

The data shows that even after storage for 8 weeks under hot and humid conditions the samples were within the standard levels of microbiological safety.

### Organoleptic studies

The tea drinks containing milk and sugar were prepared using the different samples described below following the conventional procedure.

The tea samples used were:
A. Tea (70%) + optional ingredients (30%)
B. Tea (70%) + honey (2%) + optional ingredients (28%)
C. Tea (70%) + Cashew powder (2%) + optional ingredients (28%)
D. Tea (70%) + honey (2%) + cashew powder (2%) + optional ingredients (26%)

Optional ingredients include chicory, starch, sucrose etc.

The beverage thus prepared was analysed for various attributes such as taste, mouth feel, tea character and overall acceptability of the samples. The data presented is with 8 weeks storage period under hot and humid conditions.

**TABLE 3.**

| Organoleptic analysis | | | | |
|---|---|---|---|---|
| Organoleptic attribute | SAMPLE A | SAMPLE B | SAMPLE C | SAMPLE D |
| Taste | Acceptable | Good | Good | Very Good |
| Mouth feel | Fair | Good | Good | Very Good |
| Tea Character | Fair | Good | Good | Very Good |
| Overall rating | 6/10 | 7/10 | 7/10 | 9/10 |

The data presented in table 3 shows that the samples prepared as per the invention had organoleptic attributes

Both honey and roasted cashew have no tea aroma or flavour but when they are added to tea the aroma and flavour of tea is significantly enhanced. Thus the present invention relates to a value added tea product with enhanced tea aroma and flavour.

## Claims

1. A tea product with enhanced aroma and flavour comprising 15- 95% by weight black tea, up to 5% of a mixture comprising fructose and glucose, and up to 5% of roasted nut powder.

2. A tea product according to claim 1 wherein the fructose and glucose are mixed in a proportion of 1:1.

3. A tea product according to claim 1 wherein the fructose and the glucose are obtained from honey.

4. A tea product according to claim 1 wherein the fructose and the glucose are obtained from gur or jaggery.

5. A tea product according to claim 1 that further comprises roasted chicory, a flavouring agent, a dairy or non diary whitener, starch, or a preservative.

6. A tea product according to claim 1 that has a moisture level in the range from 5 to 15%.

7. A tea product according to claim 1 that has a particle size e in the range 0.5 to 5 mm.

8. A method for preparing a tea product with enhanced aroma and flavour comprising granulating 15-95% by weight black tea and mixing with it up to 5% of a mixture comprising fructose and glucose and up to 5% of roasted nut powder.
